Europäisches Patentamt

European Patent Office

Office européen des brevets

(11) Publication number: **0 469 434 A2**

# EUROPEAN PATENT APPLICATION

(21) Application number: **91112306.5**

(22) Date of filing: **23.07.91**

(51) Int. Cl.⁵: **B29C 67/00**, A43B 5/04

(30) Priority: **31.07.90 IT 8560390**

(43) Date of publication of application:
**05.02.92 Bulletin 92/06**

(84) Designated Contracting States:
**AT CH DE FR IT LI**

(71) Applicant: **API APPLICAZIONI PLASTICHE INDUSTRIALI SPA**
**Via D. Alighieri 27**
**I-36065 Mussolente (Vi)(IT)**

(72) Inventor: **Brunetti, Sergio**
**Via Martiri di Belfiore 2**
**I-36022 Cassola (VI)(IT)**

(74) Representative: **Bonini, Ercole**
**c/o STUDIO ING. E. Bonini SAS 8 Corso Fogazzaro**
**I-36100 Vicenza(IT)**

(54) **Method for the production of ski boots and ski boots manufactured according to said method.**

(57) The invention discloses a method of production of ski boots made of plastic material, which is characterized in that the injection moulding process is of the RIM type (Reaction Injection Moulding) and in that coumpounds which react with each other to form a polyurea are used as moulding material in said process.

EP 0 469 434 A2

The invention concerns a method for the production of ski boots obtained through the RIM moulding process, wherein composite moulding materials are used, which combine to form a polyurea.

It is a known fact that, for the last 20 years approximately the manufacture ski boots entails manufacturing the hulls of the boots which are obtained through the injection moulding of plastic materials. More precisely, the moulding process which is used and which has replaced the manufacure of leather boots, consists at present in the application of the well-known process called IM (Injection Moulding) which entails the injection of plastic materials or, more properly, of thermoplastic polyurethane into the mould.

The machine used in this case is an injection press wherein the polyurethane in the shape of granules, already in the colour which one wants to obtain, is loaded into a hopper. The granules are conveyed into a heated cylinder and they are stirred by a screw within the cylinder, which pushes the material axially, while it is heating up and while a mixing and a plastification are taking place, until the softening of the material comes to a melt, i.e. until it reaches the stage which is technically called MELT. The melted material is axially pushed by the piston of the cylinder through a nozzle into the mould which remains closed for the time necessary to cool the material, said time varying in the case of ski boots from 2.5 to 3 minutes.

The time of the moulding cycle following this technique is determined by the time necessary for the cooling and the hardening of the material, i.e. 2.5 to 3 minutes, since the time necessary for the other operations is shorter and since all other operations of the cycle are performed during the hardening process.

The manufacture of ski boots in large quantities of units divided into different sizes, different models and different colours entails a rather long period for the manufacture, said period depending, of course, on the number of units which must be obtained and on the number of machines which are employed for the production.

The industries of this branch divide along the entire year the manufacture of ski boots, which are products typically sold seasonally. As a consequence, most of the year is spent in manufacturing and storing all the ski boots, which are then offered and sold on the market within a period of a few weeks.

The seasonal trend of the sales forces , therefore, the companies operating in this field to pre-arrange both models and colours almost a whole year before their sale, which means they have to pile up in their stores the finished products for several months without having the possibility of selling them, and that because, as has been said, the manufacturing process for ski boots involves long cycle periods.

Therefore, one of the main inconveniences arising for the companies operating in this field and using the above-mentioned manufacturing process is the high storage costs involved, said high costs arising both from the considerable extent of company space which is occupied for lengthy periods of time and from the investment of capitals to obtain a finished product which must be stored for a long time.

Another significant inconvenience is due to the risk that the already manufactured boots may become obsolete, since their sale is strictly influenced by fashion, and is, therefore, subject to fast changes both regarding the models and the colours. It is not an infrequent case that large lots of already moulded ski boots must be sold at highly discounted prices, because fashion has suddenly dictated a change in models or colours or even of colours and models.

Obviously such events turn into financial losses, which add to the high manufacturing costs already penalizing the product.

The purpose proposed by the present invention is to overcome the previously listed inconveniences.

The first purpose is to obtain a product, i.e. a ski boot made of plastic material which can be manufactured in very short working cycles, so as to significantly decrease both the costs and the storage periods and so as to avoid the risk of the product becoming obsolete.

Another purpose is that of obtaining a high flexibility of production, in view of enabling the manufacturer to timely react to the stimuli of the changing market and to be able to respond to the new requests within the shortest possible time. Yet another purpose is the improvement of the product quality in relation to its technical performances.

All the above-mentioned purposes and others, which will become more evident hereinafter, are reached by the present invention, which discloses a method for the production of ski boots, using plastic material which, in accordance with the contents of the first patent claim, is characterized in that the injection moulding process is of the RIM type (Reaction Injection Moulding) and in that in said moulding process the material used for the moulding consists of compounds reacting with each other so as to form a polyurea. It is a known fact that in the injection moulding process of the RIM type the moulding material is obtained through a chemical reaction in a mixing head, which is positioned very close to the mould. Two or more chemical compounds flow into this mixing head, they are thoroughly mixed and they react chemically so as to form the material which will be used for the moulding process. The reacting materials arrive at the mixing head at a liquid state and, after going through the nozzles, they are mixed and enter into the mould in a period of time comprised between 0.5 to 1 second; the chemical reaction continues then within the mould until the material solidifies and acquires the shape determined by the mould.

The moulding through the RIM process and using components which react with each other to form polyreas is particularly advantageous, since the cycle period is significantly shortened to approx. 10 seconds.

It is, therefore, easy to understand that the time necessary to mould ski boots, which with the IM-type injection moulding process amounted to 2.5 to 3 minutes, is reduced to a very minimum of 10 seconds, when using the RIM-type injection moulding process and the compounds which react to form a polyurea. The direct consequence of this cycle shortening is that, the number of moulding presses remaining the same, the production capacity increases by 15 to 16 times and this means that the production of ski boots, which was previously distributed through a 12 month period, can now be reduced even to a single month. In actuality, taking into consideration the time lost for the necessary change of moulds in the presses, both with regard to models and to shoe sizes, it can be considered that a one-year production can be manufactured in two months. The consequence of this is that storage time and costs are considerably reduced. The occupied storage spaces are also reduced, since the product can be sold as it is manufactured. The machines necessary for the production are also decreased in number and, as a consequence, the personnel operating said machines is also decreased in number.

Another not negligible advantage obtained by using the production method according to the invention, togehter with the use of chemical compounds forming polyureas consists also in that with the RIM-type moulding process it is possible to obtain the colouring of the moulded material by injecting the dye directly into the mixing head. One will be reminded here that, by using the known technique, the colouring with the normal IM process is obtained by using granules of already dyed material. This means that it is necessary to have available a certain amount of material for each colour that it is necessary to obtain. With the RIM process the compounds which form the moulding material are always the same, since the dye is added at the last minute.

Another advantage which is made possible by using the method according to the invention concerns the specific characteristics of the polyureas, which present very interesting properties, since these materials are highly resistant to hydrolysis and to temperature variations, said qualities being particularly important for ski boots, which are notoriously used in the snow and are, therefore, substantially in contact with water and in extremely variable temperatures.

As for the formulation of the mixture of the compounds which are suited to form polyureas for ski boots, in a preferred embodiment of the invention two compounds are used. They are called compound A and compound B and they are injected into the mould at the same time.

The first compound, A, constitutes the aminic part of the mixture, its composition being as follows:

## COMPOUND A

1) An amino-terminated polyether with primary and /or secondary amino groups having a molecular weight in the range of 1000 to 5000, or else a mixture of said polyethers.

This component makes up 35 to 70 parts in weight of the A compound.

2) A cross-linking, aminic-type agent, e.g. diethyltoluendiamine (DEDTA), ETHACURE 300, MOCA, UNILINK 4200 or their equivalents or a mixture of said cross-linking agents.

This component makes up 65 to 15 parts in weight of the A compound.

3) Optionally a surfactant, e.g. a polysiloxane or an equivalent agent.

This component, which does not participate in the stoichiometry of the reaction, favours the removal of the ski boot from the mould and makes up 1 to 5 parts in weight of the A compound.

4) Optionally, other components, such as catalysts, retarding or accelerating agents, hydroxy-terminated polyethers, stabilizers, dyes, mineral fillers and others, according to the specific needs.

5) Optionally, enucleated or dissolved gas, such as nitrogen or air.

The second compound, B, constitutes the isocyanic part of the mixture, its composition being as follows:

## COMPOUND B

1) A prepolymer prepared from diisocyanates and/or branched polyethers and/or amino-terminated polyethers with primary and/or secondary aminic groups of various molecular weight, having an amount of free NCO ranging from 15 to 23%.

Products of the following types fall under the heading diisocyanates: 4,4'-diphenyl- methanediisocyanate; 2,4/2,6-toluendiisocyanate, isophorone-diisocyanate, hexamethylenediisocyanate, TX MDI or their equivalents; diisocyanates modified with carbodiimides, such as dicyclohexylcarbodiimide or their equivalents also fall under the same heading.

The amount of the A compound is stoichiometric to the amount of the B compound, within a range of plus/minus 20% with respect to the NCO content.

2) Optionally enucleated or dissolved gas, such as nitrogen or air.

Some examples of formulas yielding polyureas suited for ski boots are given hereinafter. Said examples, which are given by way of example only, do not limit the scope and spirit of the invention.

EXAMPLE No. 1

COMPOUND A

JEFFAMINE T-5000 amino-terminated polyether                55 pp

DETDA                                                        44 pp

COMPOUND B

MDI prepolymer with NCO = 16.5%                        100-130 pp

EXAMPLE No. 2

COMPOUND A

JEFFAMINE D-2000 amino-terminated polyether                30 pp
JEFFAMINE T-3000 amino-terminated polyether                70 pp

4

ETHACURE 300                                              30 pp


COMPOUND B

MDI prepolymer with NCO=15%                         80-120  pp


EXAMPLE No. 3


COMPOUND A

JEFFAMINE EDP-7315 amino-terminated polyether        70 pp

JEFFAMINE T-3000 amino-terminated polyether          30 pp

UNILINK 4200                                          30 pp

Stearate zinc solution

or dilaurate zinc                                    0-5 pp

or TEGOTRENN IMR 830

TINUVIN T 73 antioxidant                             0-5 pp

dyeing paste dispersed in polyole (?)                0-5 pp


COMPOUND B

MDI prepolymer with NCO=20%                         80-120  pp


## Claims

1.  A method for the production of ski boots made of plastic material, characterized in that the injection moulding process is of the RIM type (Reaction Injection Moulding) and in that compounds which react with each other to form a polyurea are used as moulding material in said process.

2.  Ski boots obtained with the method of production according to claim 1, characterized in that the polyurea which the boots are made of, is obtained from a mixture of compounds with the following formula:
    COMPOUND A, consisting of:
    a)
    An amino-terminated polyether with primary and/or secondary amino groups and a molecular weight ranging from 1000 to 5000, or of a mixture of said polyethers.
    This agent makes up 35 to 70 parts in weight of compound A.
    b)
    A cross-linking agent of the aminic type, e.g. diethyltoluendiamine (DEDTA), ETHACURE 300, MOCA, UNILINK 4200 or their equivalents or a mixture of said cross-linking agents.
    This agent makes up 65 to 15 parts in weight of compound A
    c)
    Optionally a surfactant, e.g. a polysiloxene or its equivalent. This component, which does not participate in the stoichiometry of the reaction, favours the removal of the ski boot from the mould and makes up 1 to 5 parts in weight of the A compound.
    d)

Optionally, other components, such as catalysts, retarding or accelerating agents, hydroxy-terminated polyethers, stabilizers, dyes, mineral fillers and others, according to the specific needs.

e)

Optionally, enucleated or dissolved gas, such as nitrogen or air.

COMPOUND B, consisting of

a)

A prepolymer prepared from diisocyanates and/or branched polyethers and/or amino-terminated polyethers with primary and/or secondary aminic groups of various molecular weight, having an amount of free NCO ranging from 15 to 23%.

Products of the following types fall under the heading diisocyanates: 4,4'-diphenyl-methanediisocyanate; 2,4/2,6-toluendiisocyanate, isophorone-diisocyanate, hexamethylenediisocyanate, TX MDI or their equivalents; diisocyanates modified with carbodiimides, such as dicyclohexylcarbodiimide or their equivalents also fall under the same heading.

The amount of the A compound is stoichiometric to the amount of the B compound, within a range of plus/minus 20% with respect to the NCO content.

b)

Optionally enucleated or dissolved gas, such as nitrogen or air.

3. Ski boots manufactured according to the production method according to claim 1, characterized in that the polyurea which they are made of, is obtained from a mixture of compounds having the following formula:

COMPOUND A

| | |
|---|---|
| JEFFAMINE T-5000 amino-terminated polyether | 55 pp |
| DETDA | 44 pp |

COMPOUND B

| | |
|---|---|
| MDI prepolymer with NCO = 16.5% | 100-130 pp |

4. Ski boots manufactured according to the production method according to claim 1, characterized in that the polyurea which the boots are made of, is obtained from a mixture of compounds having the following formula:

COMPOUND A:

| | |
|---|---|
| JEFFAMINE D-2000 amino-terminated polyether | 30 pp |
| JEFFAMINE T-3000 amino-terminated polyether | 70 pp |
| ETHACURE 300 | 30 pp |

COMPOUND B:

| | |
|---|---|
| MDI prepolymer with NCO=15% | 80-120 pp |

5. Ski boots manufactured according to the production method according to claim 1, characterized in that the polyurea which the boots are made of, is obtained from a mixture of coumponds having the following formula:

COMPOUND <u>A</u>:

| | |
|---|---|
| JEFFAMINE EDP-7315 amino-terminated polyether | 70 pp |
| JEFFAMINE T-3000 amino-terminated polyether | 30 pp |
| UNILINK 4200 | 30 pp |
| Stearate zinc solution | |
| or dilaurate zinc | |
| or TEGOTRENN IMR 830 | 0-5 pp |
| TINUVIN T 73 antioxidant | 0-5 pp |
| dyeing paste dispersed in polyole | 0-5 pp |

COMPOUND <u>B</u>:

| | |
|---|---|
| MDI prepolymer with NCO=20% | 80-120  pp |

6. Ski boots manufactured according to the method of production according to claim 1, characterized in that the polyurea which the boots are made of, is obtained from a mixture of compounds having formulas according to the claims 2 or 3 or 4 or 5, and wherein gas is either enucleated or dissolved, so as to render the density of the polyurea smaller than 1.